# EUROPÄISCHE PATENTSCHRIFT

(11) **EP 0 522 325 B1**
(45) Veröffentlichungstag und Bekanntmachung des Hinweises auf die Patenterteilung: **10.09.1997**
(21) Anmeldenummer: 92110185.3
(22) Anmeldetag: 17.06.1992
(51) Int. Cl.: H04B 1/16, H04B 7/08

(54) **Steuereinrichtung für einen UKW-Empfänger mit mehreren Antennen**
Control unit for a VHF-receiver with several antennae
Unité de commande pour un récepteur FM à plusieurs antennes

(30) Priorität: 11.07.1991 DE 4122937
(43) Veröffentlichungstag der Anmeldung: 13.01.1993
(73) Patentinhaber: Blaupunkt-Werke GmbH, 31132 Hildesheim (DE)
(72) Erfinder: Wiedemann, Kurt, W-3200 Hildesheim (DE)

(56) Entgegenhaltungen:
- EP-A- 0 319 782
- WO-A-90/04288

## Beschreibung

Die Erfindung betrifft eine Steuereinrichtung für einen UKW-Empfänger mit mehreren Antennen nach dem Oberbegriff des Anspruchs 1.

Bei einer derartigen, aus der DE 37 41 698 A1, Figur 3, bekannten Steuereinrichtung wird das Ausgangssignal eines AM-Demodulators nach einer Filterung und Verstärkung den Eingängen von Mischern zugeführt. Die jeweils zweiten Mischereingänge werden von den gangssignalen eines Phasendiskriminators gespeist, welche proportional zum Sinus bzw. Cosinus aus der Phasendifferenz zwischen den Signalen uᵢ und uₛ sind. Für das dem AM-Demodulator entnommene und den Eingängen der Mischer zugeführte Signal ist eine hohe Verstärkung erforderlich, um mit dem restlichen amplitudendemodulierten Signal eine optimale Einstellung der Phasenlage zu erreichen. Da aber anfangs eines Einstellvorganges durch Mehrwegeempfang hervorgerufene Signale mit großen Amplituden auftreten können, besteht die Gefahr einer Übersteuerung der nachfolgend angeordneten Stellglieder. Bei üblichen Schaltungsanordnungen zur Verstärkungsregelung können aufgrund ihres Regelzeitverhaltens Regelschwingungen auftreten.

Der Erfindung liegt die Aufgabe zugrunde, eine schnell ansprechende, automatische Verstärkungsregelung zu schaffen, die eine Übersteuerung der nachfolgenden Stellglieder weitgehend verhindert.

Diese Aufgabe wird erfindungsgemäß durch die kennzeichnenden Merkmale des Anspruchs 1 gelöst.

Die mit der Erfindung erzielten Vorteile bestehen insbesondere darin, daß auch bei extrem schnellen Regelschwankungen ein optimales Regelverhalten gegeben ist.

Eine vorteilhafte Ausgestaltung der Steuereinrichtung ist in dem Unteranspruch angegeben.

Ein Ausführungsbeispiel der Erfindung ist in der Zeichnung dargestellt und wird im folgenden näher beschrieben.

Es zeigen:
- Figur 1: eine Steuereinrichtung und
- Figur 2: einen Verstärker mit einer automatischen Verstärkungsregelung

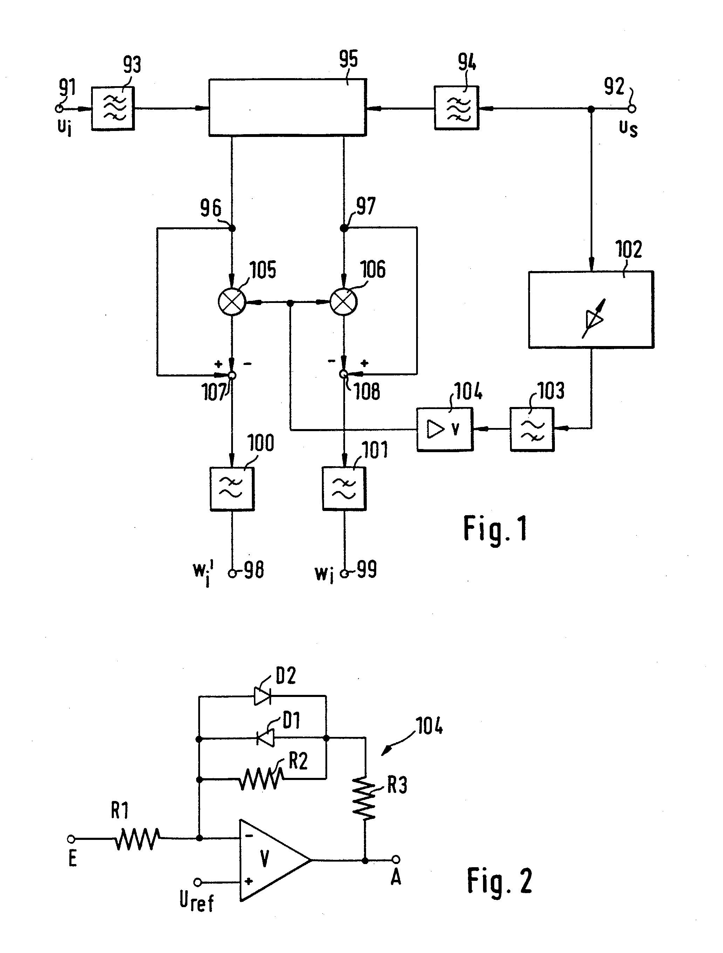

Bei einer in vereinfachter Form dargestellten Steuereinrichtung nach Fig. 1 werden zur Messung der Phasendifferenz zwischen dem jeweiligen Mischsignal uᵢ (i = 1 bis n) und dem Summensignal uₛ beide Signale über jeweils einen Eingang 91, 92 und einen Bandpaß 93, 94 einem Phasendiskriminator 95 zugeführt. Mit Hilfe der Bandpässe 93, 94 wird die Messung der Phasendifferenz auf das Nutzsignal beschränkt. Die Bandpässe 93, 94 beeinflussen zwar die Phasenlage der Nutzsignale, infolge des symmetrischen Aufbaus ist der Einfluß auf beide zugeführten Signale im wesentlichen gleich, so daß eine Verfälschung des Meßergebnisses vernachlässigbar ist. Der Phasendiskriminator 95 hat zwei Ausgänge 96, 97, an welchen jeweils Signale anstehen, die proportional zum Sinus bzw. proportional zum Cosinus des Phasenwinkels zwischen den Eingangssignalen des Phasendiskriminators sind. An den Ausgängen 98, 99 der nachgeschalteten Tiefpässe 100, 101 sind Steuerspannungen abnehmbar. Das Summensignal gelangt außerdem an den Eingang eines Amplitudendemodulators 102. Dabei umfaßt der Amplitudendemodulator einen geregelten Vorverstärker. Dieses und der nachgeschaltete Hochpaß 103 tragen dazu bei, daß der Modulationsgrad des Summensignals nahezu unabhängig vom mittleren Signalpegel ermittelt wird. Das Ausgangssignal des Hochpasses 103 wird um den Faktor v in einem Verstärker 104 verstärkt und zwei Mischern 105, 106 zugeführt, welche ferner mit den Ausgangssignalen des Phasendiskriminators 95 beaufschlagt sind. Die Ausgangssignale der Mischer 105, 106 werden in Subtrahierschaltungen 107 und 108 von den Ausgangssignalen des Phasendiskriminators 95 subtrahiert, wonach die Ergebnisse der Subtraktion tiefpaßgefiltert von den Ausgängen 98, 99 Multiplizierern zugeleitet werden, welche die Phasenlagen der zu addierenden Mischsignale steuern.

Der Verstärker 104 weist einen Operationsverstärker V auf, dessen invertierender Eingang nach Figur 2 über einen Widerstand R1 mit der Eingangsklemme E sowie über zwei in Reihe geschaltete Widerstände R2, R3 mit dem mit der Ausgangsklemme A verbundenen Verstärkerausgang verbunden ist. Der mit dem in Reihe geschalteten Widerstand R2 verbundene invertierende Eingang ist mit der Kathode einer ersten Diode D1 und der Anode einer zweiten Diode D2 verbunden. Der gemeinsame Verbindungspunkt der in Reihe geschalteten Widerstände R2, R3 ist mit der Anode der ersten Diode D1 und mit der Kathode der zweiten Diode D2 verbunden. Der nichtinvertierende Eingang des Operationsverstärkers V ist mit einer Referenzspannungsquelle U_{ref} verbunden.

Zum besseren Verständnis der Wirkungsweise der Steuereinrichtung sei erwähnt, daß AM-Modulationsanteile im ZF-Signal nur bei Mehrwegeempfang und vorhandener FM-Modulation auftreten. Daher kann am Ausgang des AM-Demodulators 102 insbesondere bei einer Sprachübertragung nach einer Sprechpause ein Signal hoher Amplitude auftreten. Hierbei werden die Dioden D1, D2 beim Überschreiten ihrer Schwellwertspannung leitend und überbrücken somit den Widerstand R2, so daß nur noch der Widerstand R3 im Gegenkopplungszweig wirksam ist. Die Verstärkung wird hierdurch zunächst stark herabgesetzt. Im Laufe einer optimalen Phaseneinstellung der zu einem Summensignal addierten Mischsignale wird durch das schwächer werdende AM-Signal die zur restlichen Korrektur erforderliche hohe Verstärkung wieder hergestellt. Die Verstärkungsregelung verhindert ein Übersteuern der nachgeschalteten Stellglieder und ermöglicht ein Ausregeln der Phaseneinstellung in weniger als einer Millisekunde.

## Patentansprüche

1. Steuereinrichtung für einen UKW-Empfänger mit mehreren Antennen, insbesondere für ein Kraftfahrzeug, wobei das von jeder Antenne empfangene Signal mit einem im Verstärker erzeugten Träger gemischt wird und die somit entstandenen Mischsignale mit steuerbarer Phasenlage zu einem Summensignal addiert werden, und die Phasenlagen der zu addierenden Mischsignale jeweils in Abhängigkeit der Phasendifferenz zwischen dem jeweiligen Mischsignal (uᵢ) und dem Summensignal (uₛ) gesteuert werden, wobei für jedes der Mischsignale (uᵢ) ein Phasendiskriminator (95) vorgesehen ist, welchem einerseits das Mischsignal (uᵢ) und andererseits das Summensignal (uₛ) über je einen Bandpaß (93, 94) zuführbar sind, und der Phasendiskriminator (95) einen Ausgang (96) für die Sinusfunktion der Phasendifferenz und einen Ausgang (97) für die Cosinus-Funktion der Phasendifferenz aufweist und den Ausgängen (96, 97) je ein Tiefpaß (100, 101) nachgeschaltet ist, wobei zwischen die Ausgänge (96,97) des Phasendiskriminators (95) und die Tiefpässe (100, 101) je eine Reihenschaltung aus einem Mischer (105, 106) und einer Subtrahierschaltung (107, 108) eingefügt ist und den Subtrahierschaltungen (107, 108) einerseits die Ausgangssignale der Mischer (105, 106) und andererseits die Ausgangssignale des Phasendiskriminators (95) zuführbar sind, und den Mischern (105, 106) ferner das amplitudendemodulierte Summensignal über einen Verstärker (104) zugeführt ist, dadurch gekennzeichnet, daß der Verstärker (104) zur Realisierung einer schnell ansprechenden automatischen Verstärkungsregelung einen Gegenkopplungszweig mit mindestens zwei in Reihe geschalteten Widerständen (R2, R3) aufweist, wobei mindestens einem der Widerstände zwei antiparallel geschaltete Dioden (D1, D2) parallel geschaltet sind, so daß der Verstärkungsfaktor oberhalb eines vorgegebenen Eingangspegels stark herabgesetzt wird.

2. Steuereinrichtung für einen UKW-Empfänger nach Anspruch 1, dadurch gekennzeichnet, daß der Verstärker (104) einen Operationsverstärker (V) aufweist, dessen Ausgang (A) über zwei in Reihe geschaltete Widerstände (R2, R3) mit dem invertierenden Eingang verbunden ist, wobei einem der Widerstände (R2, R3) die antiparallel angeordneten Dioden (D1, D2) parallel geschaltet sind und dessen invertierender Eingang über einen weiteren Widerstand (R1) mit der Eingangsklemme (E) verbunden ist.

## Claims

1. Control device for a VHF receiver having a plurality of antennas, in particular for a motor vehicle, the signal which is received by each antenna being mixed with a carrier which is produced in the amplifier, and the mixed signals which are produced in this way being added with a controllable phase angle to form a sum signal, and the phase angles of the mixed signals to be added each being controlled as a function of the phase difference between the respective mixed signal (uᵢ) and the sum signal (uₛ), a phase discriminator (95) being provided for each of the mixed signals (uᵢ), to which phase discriminator (95) the mixed signal (uᵢ) can be supplied on the one hand and the sum signal (uₛ) on the other hand, in each case via a bandpass filter (93, 94), and the phase discriminator (95) having an output (96) for the sine function of the phase difference and an output (97) for the cosine function of the phase difference, and a low-pass filter (100, 101) being connected downstream of each of the outputs (96, 97), a series circuit composed of a mixer (105, 106) and a subtracter circuit (107, 108) in each case being inserted between the low-pass filters (100, 101) and the outputs (96, 97) of the phase discriminator (95), and it being possible to supply to the subtracter circuits (107, 108) the output signals of the mixers (105, 106) on the one hand, and the output signals of the phase discriminator (95) on the. other hand, and the amplitude-demodulated sum signal furthermore being supplied to the mixers (105, 106) via an amplifier (104), characterized in that the amplifier (104) has a negative feedback path, having at least two series-connected resistors (R2, R3), in order to produce fast-response automatic gain control, two reverse-parallel connected diodes (D1, D2) being connected in parallel with at least one of the resistors, so that the gain is severely reduced above a predetermined input level.

2. Control device for a VHF receiver according to Claim 1, characterized in that the amplifier (104) has an operational amplifier (V) whose output (A) is connected to the inverting input via two series-connected resistors (R2, R3), the reverse-parallel arranged diodes (D1, D2) being connected in parallel with one of the resistors (R2, R3), and the inverting input of said operational amplifier (V) being connected to the input terminal (E) via a further resistor (R1).

## Revendications

1. Unité de commande pour un récepteur FM à plusieurs antennes, notamment pour un véhicule automobile, dans laquelle le signal reçu par chaque antenne est mélangé à une porteuse générée dans un amplificateur, les signaux de mélange ainsi obtenus sont additionnés en un signal de somme suivant une phase commandée et la phase des signaux de mélange à additionner est commandée en fonction de chaque différence de phase entre le signal de mélange respectif (uᵢ) et le signal de somme (uₛ) et, pour chaque signal de mélange (uᵢ), il est prévu un discriminateur de phase (95) qui reçoit, d'une part, le signal de mélange (uᵢ) et, d'autre part, le signal de somme (uₛ), chaque fois par l'intermédiaire d'un filtre passe-bande (93, 94), le discriminateur de phase (95) comporte une sortie (96) pour la fonction sinus de la différence de phase et une sortie (97) pour la fonction cosinus de la différence de phase, les sorties (96, 97) étant suivies chacune d'un filtre passe-bas (100, 101),
entre les sorties (96, 97) du discriminateur de phase (95) et les filtres passe-bas (100, 101) il y a un montage en série formé d'un mélangeur (105, 106) et d'un soustracteur (107, 108),
les soustracteurs (107, 108) reçoivent, d'une part, les signaux de sortie des mélangeurs (105, 106), et, d'autre part, les signaux de sortie du discriminateur de phase (95),
et les mélangeurs (105, 106) reçoivent en outre le signal de somme à modulation d'amplitude, par l'intermédiaire d'un amplificateur (104),
caractérisée en ce que
l'amplificateur (104) comprend une branche de contre-réaction avec au moins deux résistances (R2, R3) branchées en série, pour avoir une réponse rapide de la régulation automatique d'amplification,
au moins l'une des deux résistances ayant en parallèle deux diodes D1, D2 en montage antiparallèle, de façon que le coefficient d'amplification soit fortement réduit au-dessus d'un niveau d'entrée prédéterminé.

2. Unité de commande d'un récepteur FM selon la revendication 1,
caractérisée en ce que
l'amplificateur (104) comprend un amplificateur opérationnel (V) dont la sortie (A) est reliée à l'entrée inversée de l'amplificateur par deux résistances (R2, R3) branchées en série, les diodes à montage antiparallèle (D1, D2) étant branchées en parallèle sur l'une des résistances (R2, R3) et l'entrée inversée de l'amplificateur étant reliée à la borne d'entrée (E) par une autre résistance (R1).
